(19) Europäisches Patentamt
European Patent Office
Office européen des brevets

(11) **EP 2 105 714 A1**

(12) **EUROPEAN PATENT APPLICATION**

(43) Date of publication:
**30.09.2009 Bulletin 2009/40**

(51) Int Cl.:
*G01F 1/68* (2006.01)     *G01F 1/684* (2006.01)
*G01F 1/698* (2006.01)    *F02D 41/00* (2006.01)

(21) Application number: **09001444.0**

(22) Date of filing: **03.02.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **28.03.2008   JP 2008085180**

(71) Applicant: **Hitachi, Ltd.
Chiyoda-ku
Tokyo (JP)**

(72) Inventors:
• **Miyata, Motoyuki
Tokyo 100-8220 (JP)**

• **Tokuyasu, Noboru
Tokyo 100-8220 (JP)**
• **Hoshika, Hiroaki
Hitachinaka-shi
Ibaraki 312-0062 (JP)**
• **Yamaoka, Shiro
Tokyo 100-8220 (JP)**

(74) Representative: **Beetz & Partner
Patentanwälte
Steinsdorfstrasse 10
80538 München (DE)**

(54) **Thermal gas flowmeter**

(57)     A high-accuracy EGR sensor is provided. A re-circulation system is provided which controls the flow rate of EGR by use of the sensor (7; 11). A thermal gas flowmeter (7) includes a heating resistor (4) disposed in a flow of gas to be measured for detecting the flow rate of the gas, and an external circuit (10) electrically connected to the heating resistor (4) for outputting a signal according to the flow rate of the gas to be measured using the heating resistor (4). The heating resistor (4) is controlled to be heated at a temperature equal to or higher than a vapor film forming temperature for forming a vapor film.

# FIG. 1

**Description**

FIELD OF THE INVENTION

The present invention relates to a thermal gas flowmeter, and an exhaust gas recirculation system using the thermal gas flowmeter.

BACKGROUND OF THE INVENTION

In order to measure the flow rate of gas to be measured for a long time, the certain accuracy is desired to be maintained over the long time in operation. When the gas to be measured contains various components and material, however, it is difficult, to maintain the accurate measurement for the long time. Measurement of the flow rate of an exhaust gas in an exhaust gas recirculation system of an internal combustion engine will be described below as one example.

The exhaust gas recirculation (hereinafter referred to as an "EGR") system is a system for returning an exhaust gas discharged from the internal combustion engine, such as a vehicle, to an intake side. The system is designed to mix a $CO_2$ gas component with a small ratio of specific heat contained in the exhaust gas with intake air, thereby decreasing the combustion temperature to reduce the amount of nitrogen oxide NOx of the exhaust gas. In order to reduce the amount of nitrogen oxide NOx, it is necessary to control the amount of EGR with high accuracy. In a gasoline engine, for example, when the flow rate of recirculated exhaust gas is not controlled accurately, there poses a problem that a desired torque output is not obtained, or an air fuel ratio is not controlled appropriately. Further, for example, in a diesel engine, the excessive amount of EGR leads to an increase in amount of soot (particulate molecule, which is hereinafter referred to as a "PM") of the exhaust gas. The amount of EGR needs to be controlled with high accuracy so as to reduce occurrence of PM while decreasing the amount of NOx.

The present EGR system performs indirect control which involves estimating the amount of EGR based on information on the intake side, for example, information about an air flow sensor for measuring the amount of air on the intake side, and about the degree of opening of a throttle. However, in order to satisfy emission regulations more strictly required domestically and internationally in the future, it is necessary to develop a gas flowmeter for directly measuring the EGR amount.

It has been reported in development of the gas flowmeter for directly measuring the flow rate of EGR that PMs contained in the exhaust gas adhere to the surface of a measuring element to reduce the accuracy of measurement. On the other hand, JP-A-2007-101426 (Patent Document 1) discloses means for preventing the adhesion of PM by heating an element.

In the case of exhaust gas, the exhaust gas can have different properties, including compositions, depending on the state of the internal combustion engine, which may result in different polluted states of the element. For example, when the temperature of exhaust gas is equal to or higher than a dew-point temperature, the PM is a main component of pollution. For the exhaust gas temperature below the dew-point temperature, pollution may be caused due to condensed water contained in the exhaust gas.

SUMMARY OF THE INVENTION

Thus, it is an object of the invention to provide a flow rate measuring element, and a flowmeter which can maintain the necessary accuracy of measurement of the exhaust gas even with different components and even in the case where the causes for pollution of the measuring element of the flowmeter are different.

Further, it is another object of the invention to provide an exhaust gas recirculation system for a vehicle which controls the flow rate of recirculated gas with high accuracy.

According to one aspect of the invention, a thermal gas flowmeter is provided which includes a heating resistor disposed in a flow of gas to be measured, and an external circuit electrically connected to the heating resistor for outputting a signal according to a flow rate of the gas to be measured. The gas flowmeter is adapted to measure the flow rate of the gas from the amount of heat taken from the heating resistor.

The thermal gas flowmeter includes a heating portion constructed of an electrically insulating base, the heating resistor formed at the base, and a protective layer formed over the base and the heating resistor; the external circuit for outputting a signal according to the flow rate of the gas to be measured obtained from the heating portion; and a lead for electrically connecting the heating portion with the external circuit. The heating resistor is disposed in the flow of the gas to be measured, and thus the mass flow rate of the gas can be detected from a value of current flowing through the heating resistor. The external circuit is electrically connected to the heating resistor, and outputs the signal according to the flow rate of the gas to be measured, which signal is obtained through the heating resistor, to an engine controller or the like.

In order to prevent adhesion of PM and the like to the flowmeter, the heating resistor of the flowmeter is heated. The heating temperature at that time is preferably equal to or higher than a vapor film formation temperature at which a vapor film can be formed around the flowmeter, or equal to or higher than 600 °C. Further, the heating resistor is controlled to be heated at a temperature Twsn or more represented by the following formula:

$$\text{Twsn} = \text{TL} + (314 - \text{TL}) / (1 + \beta 1/2)$$

$$\beta = \lambda W C W \rho W / \lambda L C L \rho L$$

where

TL      is a temperature of droplet,
λL      is a thermal conductivity of water,
CL      is a specific heat of water,
ρL      is a density of water,
λW      is a thermal conductivity of a coat material,
CW      is a specific heat of the coat material, and
pW      is a density of the coat material.

The heating of the heating resistor is effective, in particular, when the temperature of the gas to be measured is equal to or lower than a dew-point temperature. In application to the EGR system or the like of the internal combustion engine, the heating resistor can be heated at a temperature equal to or higher than the vapor film forming temperature for forming the vapor film when the temperature of exhaust gas is lower than the dew-point temperature, or when the flow rate of exhaust gas is measured on the rear stage side of an exhaust gas cooler.

Even when the temperature of the gas to be measured is higher than the dew-point temperature, the heating resistor is preferably heated at a temperature of 350 °C or more because of the possibility of adhesion of PM. The heating resistor is heated at a temperature equal to or higher than the vapor film forming temperature for forming the vapor film when the temperature of the gas to be measured is equal to or lower than the dew-point temperature. When the temperature of the gas to be measured reaches a predetermined temperature equal to or higher than the dew-point temperature, the measurement of flow rate can be continued at the same temperature, but may be performed by decreasing the temperature of the heating resistor down to 350°C.

In order to heat the heating resistor at such a temperature, the protective layer needs to have a heatproof temperature equal to or higher than the heating temperature of the heating resistor. The transition point of glass of the protective layer may be preferably a temperature equal to or higher than 650°C. The protective layer may preferably include a composition containing 30 to 60 % by weight of $SiO_2$, and an oxide selected from the group consisting of at least $Al_2O_3$, an alkaline earth oxide, $ZrO_2$, and a rare earth oxide, specifically, 5 to 20 % by weight of $Al_2O_3$, 25 to 50 % by weight of alkaline earth oxide, 1 to 15 % by weight of $ZrO_2$, and 0 to 20 % by weight of rare earth oxide in terms of oxide. The thermal expansion coefficient of the glass is determined taking into consideration thermal expansion coefficients of the insulating base and metal to be preferably 50 to 80 $\times$ $10^{-7}$/°C.

The thermal gas flowmeter is suitable for use in an exhaust gas recirculation system for recirculating exhaust gas back to the intake side. The thermal gas flowmeter is disposed in a pipe for recirculating the exhaust gas from the exhaust side back to the intake side, and the flow rate of the recirculated exhaust gas is measured, while a flow rate adjustment valve can be controlled by a flow rate adjustment valve controller for adjusting the amount of exhaust gas recirculated.back to the intake side using information about the flow rate.

A cooler for cooling the exhaust gas recirculated in the pipe is provided in the exhaust gas recirculation system. The thermal gas flowmeter can measure the temperature of the recirculated exhaust gas. Furthermore, the gas flowmeters can be provided on the upstream and downstream sides of the cooler.

When the thermal gas flowmeter is provided in the exhaust gas recirculation system, in order to avoid the adhesion of PM or the like to the flowmeter, the exhaust gas cannot be recirculated until the heating element is controlled to be heated at a temperature equal to or higher than the vapor film forming temperature for forming the vapor film, or the heating element can be controlled to be heated at a temperature equal to or higher than the vapor film forming temperature for forming the vapor film before the engine is operated.

Accordingly, the invention can provide the flow rate measuring element and the flowmeter which can maintain the necessary accuracy of measurement, and thus can control the flow rate of EGR using the flowmeter with high accuracy.

BRIEF DESCTIPTION OF THE DRAWINGS

The above and other objects, features and advantages of the present invention will become apparent from the following description taken in connection with the accompanying drawings, in which:

Fig. 1 is a sectional view of an element 1;
Fig. 2 is a sectional view of a gas flowmeter 7;
Fig. 3 is a construction diagram of an EGR system;
Fig. 4 is a construction diagram of another EGR system;
Fig. 5 is a construction diagram of a further EGR system;
Fig. 6 is a diagram showing a relationship between the property value of a protective coat layer and the temperature of a heating element;
Fig. 7 is a diagram showing a relationship between the coefficient of thermal expansion and the ratio of $B_2O_3/SiO_2$;
Fig. 8 is a diagram showing a relationship between the coefficient of thermal expansion and the ratio of $ZrO_2/SiO_2$;
Fig. 9 is a diagram showing a relationship between the coefficient of thermal expansion and the ratio of $MgO/SiO_2$;
Fig. 10 is a diagram showing a relationship between the coefficient of thermal expansion and the ratio of $CaO/SiO_2$;
Fig. 11 is a diagram showing a relationship between the coefficient of thermal.expansion and the ratio of $SrO/SiO_2$;
Fig. 12 is a diagram showing a relationship between the coefficient of thermal expansion and the ratio of $BaO/SiO_2$;
Fig. 13 is a schematic diagram showing a measurement method of a rate of spread;
Fig. 14 is a diagram showing a relationship between the rate of spread and the ratio of $Al_2O_3/SiO_2$;
Fig. 15 is a diagram showing a relationship between the rate of spread and the ratio of $MgO/SiO_2$;
Fig. 16 is a diagram showing a relationship between the rate of spread and the ratio of $CaO/SiO_2$;
Fig. 17 is a diagram showing a relationship between the rate of spread and the ratio of $SrO/SiO_2$;
Fig. 18 is a diagram showing a relationship between the rate of spread and the ratio of $BaO/SiO_2$;
Fig. 19 is a diagram showing a relationship between the rate of decrease in weight and the ratio of $Al_2O_3/SiO_2$;
Fig. 20 is a diagram showing a relationship between the rate of decrease in weight and the ratio of $B_2O_3/SiO_2$;
Fig. 21 is a diagram showing a relationship between the rate of decrease in weight and the ratio of $MgO/SiO_2$;
Fig. 22 is a diagram showing a relationship between the rate of decrease in weight and the ratio of $CaO/SiO_2$;
Fig. 23 is a diagram showing a relationship between the rate of decrease in weight and the ratio of $SrO/SiO_2$;
Fig. 24 is a diagram showing a relationship between the rate of decrease in weight and the ratio of $BaO/SiO_2$; and
Fig. 25 is a diagram showing a relationship between the heating temperature of the heating element and the amount of adhesion.

DETAILED DESCRIPTION OF THE PREFERRED EMBODIMENTS

Now, a gas flowmeter will be described below in detail.
The gas flowmeter includes a heating resistor, a controller for controlling heat generation of the heating resistor, and an external circuit for outputting a signal according to the flow rate of gas to be measured. The gas flowmeter is disposed in a flow path for the gas to be measured, and detects the mass flow rate of the gas based on a change in electric resistance of the heating resistor.
The heating resistor includes a heating portion and a lead for electrically connecting the heating portion to the controller. The heating portion has a metal resistor formed on a base having electric insulation (electrically insulating base), and a coating layer for protecting the surface of the metal resistor. The end of the metal resistor is electrically connected to the lead by welding or the like.
An exhaust gas recirculation system is a system for recirculating the exhaust gas of the internal combustion engine back to the intake side. The flow rate of fluid recirculated from the exhaust side back to the intake side needs to be adjusted under control of a flow rate adjustment valve. The gas flowmeter is disposed in a pipe or the like for recirculation to measure the flow rate of gas. Based on the amount measured, the flow rate of exhaust gas recirculated back to the intake side is controlled.
The exhaust gas recirculation system can be provided with a cooler for cooling the recirculated exhaust gas. In the exhaust gas recirculation system including the cooler, the PM components and the like in the exhaust gas are solidified to adhere to the cooler when cooling the exhaust gas by the cooler, thus causing clogging of the cooler, resulting in a decreased flow rate. Thus, the flow rates of exhaust gas before and after the cooler are respectively measured to enable measurement of the degree of clogging.

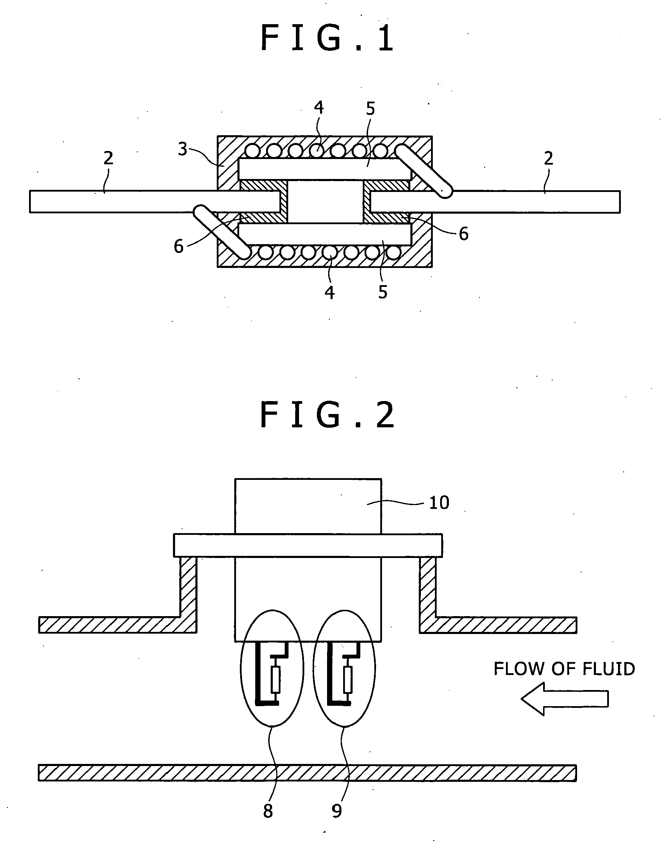

Fig. 1 shows an example of a schematic sectional view of a gas flow element 1. The gas flow element 1 shown in Fig. 1 includes an electrically insulating base 5 having a hollow shape, and leads 2 connected and fixed to both ends of the electrically insulating base 5 by connection members 6. A metal resistor 4 is wound around the surface of the electrically insulating base 5 so as to have a predetermined resistance. Both ends of the metal resistor 4 are connected to the leads 2. A protective coat 3 is formed on the surface of the gas flow element 1 so as to protect the metal resistor 4, the connection members 6, and the leads 2.

Fig. 2 is a schematic sectional view of a gas flowmeter 7 using the element shown in Fig. 1, showing an example of the construction of the gas flowmeter. The gas flowmeter 7 uses two elements 1 as one set, both of which are disposed in a fluid passage for allowing the fluid to be measured to pass therethrough. One of both elements is used as an element 9 for measuring the temperature of the fluid, and the other is used as an element 8 for measuring the flow rate thereof. The elements are connected to a control circuit 10. The element 8 has the temperature controlled by the control circuit 10 by being constantly heated so as to keep a certain difference in temperature from that of the element 9. Measurement of the flow rate is performed by converting the amount of heat derived from the element 8 into the fluid by heat transfer, into an electric signal.

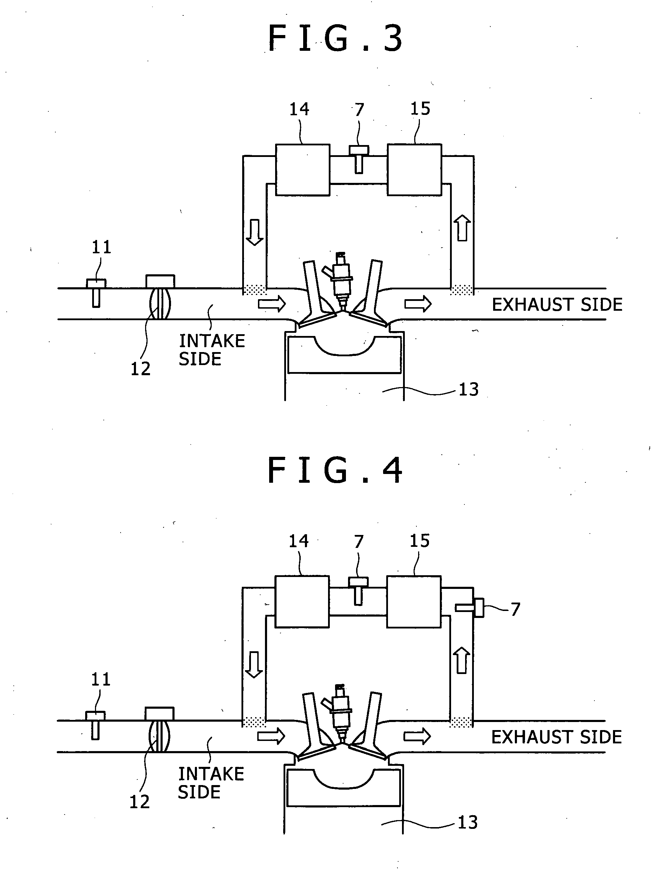

Fig. 3 shows an example of the construction diagram of the EGR system using the gas flowmeter 7. The exhaust gas burned by an internal combustion engine 13 is cooled by an EGR cooler 15, and then has the amount of EGR controlled by an EGR valve 14. The exhaust gas is returned to the intake side of the internal combustion engine 13 again, and then is re-used for combustion. A method for controlling an EGR amount is hitherto known which involves estimating an EGR amount based on information provided from the air flow sensor 11 on the intake side and about the opening degree of the electrically controlled throttle 12, and controlling the EGR amount. This method enables control of the EGR amount in a steady state, but cannot control the EGR amount with high accuracy in a transitional state, such as in acceleration or deceleration during driving. As shown in Fig. 3, the gas flowmeter 7 is set in the EGR flow path. The EGR valve 14 or the like is controlled by an EGR controller (not shown) based on a value detected by the flowmeter, which enables the control of the EGR amount with high accuracy even in the transitional state.

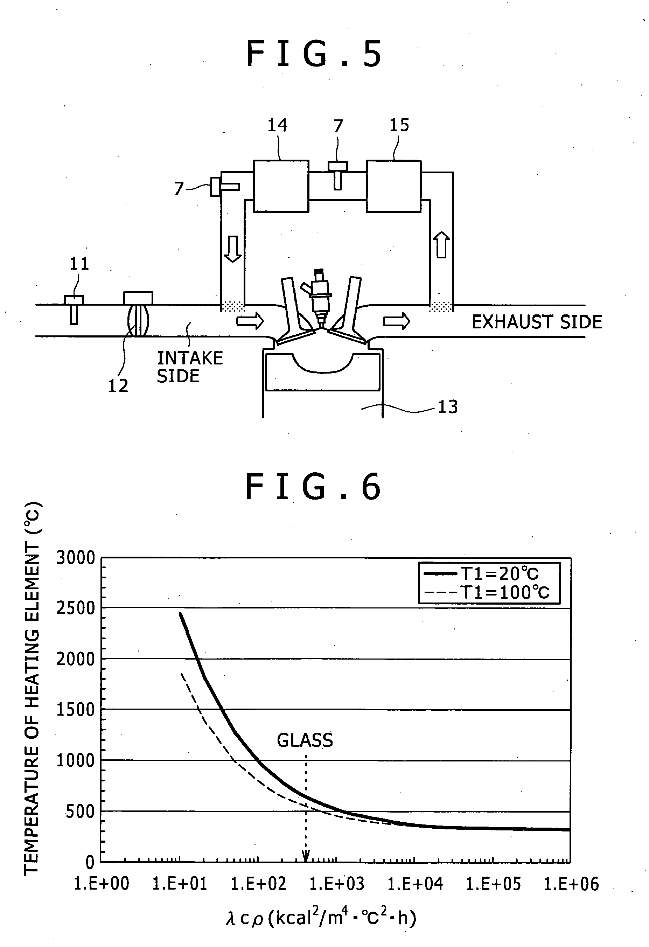

The set position of the gas flowmeter 7 can be any other position on the exhaust side, but needs to be positioned taking into consideration a heatproof temperature of a member used in the flowmeter. A seal member or the like of a control circuit of the flowmeter includes, in use, a resin member which may be degraded due to a high-temperature exhaust gas. Thus, the flowmeter having low heat resistance and formed of resin or the like may be preferably set on the downstream side (intake side) of the EGR cooler 15. In particular, the optimum set position of the gas flowmeter 7 is provided on the uptstream side of the EGR valve as well as on the downstream side (intake side) of the EGR cooler 15 as shown in Fig. 3. As shown in Figs. 4 and 5, the gas flowmeter may be set on the uptstream side of the EGR cooler, or on the downstream side of the EGR valve according to the purpose. A flow path divided from a main passage of the exhaust gas may be provided, and the gas flowmeter 7 may be provided in the flow path divided.

Provision of a plurality of flow meters can measure the flow rates of the gas from the respective devices, including the cooler, and the valve, thereby enabling observation or the like of the result of control of each device.

The flowmeter using silica glass of the invention has excellent heat resistance as compared to a conventional flowmeter for an air flow sensor using lead glass. Thus, application of the flowmeter of the invention to measurement of the flow rate on the intake side can prevent the adhesion of pollution material contained in the gas on the intake side by heating the flowmeter at high temperature, thereby effectively improving the accuracy of measurement of the flow rate of the gas on the intake side.

The flow rate measuring element can include the electrically insulating base 5 made of insulating inorganic material, such as alumina, or quartz, or a metal material having an insulating inorganic material formed on its surface. The electrically insulating base 5 can have any one of a columnar shape, a flat plate shape, and a multangular shape, in addition to the cylindrical shape shown in Fig. 1. The electrically insulating base 5 in the cylindrical shape or columnar shape has the dimension of 0.1 to 1.0 mm in outer diameter, and 1.0 to 5.0 mm in length. In particular, the base having the cylindrical shape may preferably have the outer diameter of 0.3 to 0.7 mm and the length of 2.0 to 3.0 mm so as to set the resistance of the heating resistor to a predetermined value.

The lead 2, and the metal resistor 4 in use can contain noble metal, such as platinum, iridium, rhodium, palladium, gold, and silver. Alternatively, alloy material, including an alloy of the above noble metal and non-noble metal, such as nickel or cobalt, may be used. Otherwise, a material having a noble metal formed on a surface of a non-noble metal material can be used.

The lead 2 is made of the above material, and has a section in a circular shape, an ellipsoidal shape, a flat plate shape, or a multangular shape, and preferably in the circular or ellipsoidal shape. When the leads 2 are inserted into both ends of the electrically insulating base 5, the sectional dimension of the lead 2 is smaller than the inner diameter of the electrically insulating base 5.

The metal resistor 4 is disposed on the surface of the electrically insulating base. The metal resistor 4 is formed by winding a wire rod around the surface of the electrically insulating base, or formed as a wiring film on a surface of the electrically insulating base. Methods for forming the wiring film can include in use a physical vapor deposition method (PDV), a chemical vapor deposition method (CVD), and plating.

In forming the metal resistor using a wire rod, the material and diameter of the wire rod, and the length of the winding, a tensile force applied to the wire rod in winding, and the like are adjusted such that a resistance value of the resistor is a predetermined value. The diameter of the wire rod is preferably in a range of 0.1 to 100 $\mu$m, and more preferably 1 to 50 $\mu$m.

In forming the metal resistor in the form of film, the shape of the resistor can be formed in a shape appropriate for the shape of the electrically insulating base, for example, in a spiral shape or a meandering shape. The resistance of the resistor is adjusted to the predetermined value by the material, shape, and thickness of the formed film. The thickness of the film may be preferably in a range of 0.1 to 100 $\mu$m according to the forming method, material, and shape of the film.

The metal resistor does not need to be provided in direct contact with the electrically insulating base. An intermediate layer, such as a stress relaxation layer or a reaction inhibiting layer, may be formed between the electrically insulating base and the metal resistor. Such an intermediate layer can be formed not only in the case of employing the wiring film, but also in the case of employing the wire rod in the same way. The connection member 6 is made of glass, or a mixture of ceramics, such as alumina, or zirconia, and glass, in use. Such glass or ceramics is mixed with solvent, such as terpineol, screen oil, or butyl carbitol, to form a paste. The paste is applied to the leads and/or electrically insulating base, and then calcined, which can connect the leads to the electrically insulating base. Glass materials include, for example, amorphous or crystalline borosilicate glass, alumina-silicate glass, and alumina-borosilicate glass. Ceramics include, for example, alumina, zirconia, silicon nitride, and silicon carbide. The viscosity of the paste can be adjusted by the amount of solvent, or binder, such as ethylcellulose.

The flow rate measuring element is used for measuring the flow rate of the intake gas or exhaust gas. In particular, in setting the measuring element in the exhaust gas, various kinds of materials, including PMs contained in the exhaust gas, exhaust condensed water, and metal components eluted by the exhaust condensed water may adhere to the surface of the element, which leads to degradation of the accuracy of measurement. In order to prevent the adhesion of such materials, it is necessary to energize and heat the element thereby to prevent the adhesion of the materials to the element.

The protective coat is made of inorganic material, in particular, glass material, in use. The glass material can be combined with ceramic or metal if necessary. The protective coat can be formed by adding organic solvent, such as terpineol, or butyl carbitol, to pulverized inorganic material to make a paste, and by applying and burning the paste. The viscosity of the paste can be adjusted by the amount of solvent, or binder to be mixed. The binder is, for example, ethylcellulose. The grain size of glass pulverized in making the paste is preferably equal to or less than 200 $\mu$m, and more preferably equal to or less than 100 $\mu$m. For the grain size larger than 200 $\mu$m, the glass is not sufficiently softened in calcining, thus forming irregularities in the protective coat after calcination. When the protective coat is made using glass, the temperature of calcination is preferably equal to or less than 1300 °C. The calcination at a temperature higher than 1300 °C degrades the strength of the lead or metal resistor, thus resulting in a high possibility of disconnection or breakage. The thickness of the protective coat is preferably in a range of 0.5 to 500 $\mu$m. The protective coat having the thickness below 0.5 $\mu$m cannot sufficiently coat the metal resistor. The protective coat having the thickness larger than 500 $\mu$m results in reduced sensitivity of measurement.

Fig. 6 shows a relationship between a thermal characteristic value of the protective coat and a heating temperature of a heating element for forming a vapor film. As shown in the figure, the heating temperature of the heating element for forming the vapor film depends on the temperature of a droplet (T1) and a thermal physical property value $\lambda C\rho$ ($\lambda$: thermal conductivity, C: specific heat, p: density) of the protective coat. In particular, the heating temperature of the heating element becomes high as the thermal physical property value $\lambda C\rho$ of the protective coat is decreased.

When the protective coat is made of glass material, the heating of the protective coat at a temperature of 600 °C or more can prevent the pollution depending on the temperature of the droplet. Thus, the heating element is preferably heated at a temperature of 600 °C or more. In order to set the above heating temperature, the transition point of the glass material needs to be equal to or more than 650 °C. The transition point of the glass material is preferably equal to or more than 700 °C.

The thermal expansion coefficient of the glass forming the protective coat needs to be 50 to 80 $\times$ 10$^{-7}$/ °C from a viewpoint of the relationship among the electrically insulating base, the metal resistor, and the lead, and more preferably 55 to 70 $\times$ 10$^{-7}$/°C For example, when alumina is used as the insulating base, the thermal expansion coefficient of the base is about 73 $\times$ 10$^{-7}$ /°C. The glass material coating the insulating base has a thermal expansion coefficient slightly smaller than that of the base so as to give a compression stress. Thus, the thermal expansion coefficient of the glass material is preferably about 60 $\times$ 10$^{-7}$/°C.

The composition of the glass used in the protective coat will be described below.

The amount of $SiO_2$ is preferably not less than 30 % by weight nor more than 60 % by weight, and more preferably equal to or more than 40 % by weight. This is because the transition point of the glass becomes lower than 650°C when the amount of $SiO_2$ is less than 30 % by weight, and the calcination temperature becomes higher than 1300°C when the amount of $SiO_2$ is more than 60 % by weight.

Al$_2$O$_3$ has an effect of increasing the transition point of glass, and thus the amount of Al$_2$O$_3$ is preferably not less than 5 % by weight nor more than 20 % by weight. This is because the effect of increasing the transition point is not exhibited when the amount of the Al$_2$O$_3$ is less than 5 % by weight, and the calcination temperature becomes higher than 1300 °C when the amount of the Al$_2$O$_3$ is more than 20 % by weight.

Alkaline earth oxides have an effect of decreasing the high-temperature viscosity of the glass, while increasing the thermal expansion coefficient of the glass, and thus the amount of the alkaline earth oxide is preferably not less than 25 % by weight nor more than 50 % by weight. This is because the effect of improving the thermal expansion coefficient is not exhibited when the amount of alkaline earth oxide is less than 25 % by weight, and the thermal expansion coefficient becomes larger than 80 $\times$ 10$^{-7}$ °C when the amount of alkaline earth oxide is more than 50 % by weight.

ZrO$_2$ has an effect of improving corrosion resistance of the glass, and thus the amount of ZrO$_2$ is preferably not less than 1 % by weight nor more than 15 % by weight. This is because the effect of improving the corrosion resistance is not exhibited when the amount of ZrO$_2$ is below 1 % by weight, and the thermal expansion coefficient of the glass becomes larger than 80 $\times$ 10$^{-7}$ °C when the amount of ZrO$_2$ is more than 15 % by weight.

Addition of a rare earth oxide has effects of increasing the transition point of the glass, and of increasing the thermal expansion coefficient thereof. The amount of the rare earth oxide is preferably equal to or less than 20 % by weight, and more preferably equal to or less than 10 % by weight. This is because the thermal expansion coefficient becomes larger than 80 $\times$ 10$^{-7}$ °C when the amount of the rare earth oxide is more than 20 % by weight.

B$_2$O$_3$, ZnO, or the like can be added to the glass, if necessary. B$_2$O$_3$ is effective for improving the high-temperature viscosity of the glass. When the amount of B$_2$O$_3$ is more than 10 % by weight, the transition point of the glass becomes lower than 650 °C, which is not preferable. ZnO is effective for improving the corrosion resistance. Thus, when the amount of ZnO is more than 5 % by weight, the transition point of the glass becomes lower than 650 °C, which is not preferable.

The protective coat can also be made, in use, of ceramic stable in a high-temperature exhaust gas atmosphere, such as alumina oxide, zirconia oxide, silicon carbide, silicon nitride, or mullite, in addition to the glass if necessary. Such ceramic can be formed as the protective coat by a flame spraying process, a sputtering process, or a sol-gel process.

[Experimental Example 1]

The protective coat layer of the flow rate measuring element is formed by using glass. First, a method for making glass to be used as the protective layer of the flow rate measuring element will be specifically described below.

A certain amount of raw material powder was measured and introduced into a platinum crucible, mixed, and then heated and dissolved in an electric oven at a temperature of 1000 to 1600 °C depending on the composition. After the raw material was sufficiently melted, a platinum stirring blade was inserted into a glass melt, and the glass melt was stirred with the blade for about forty minutes. After removing the stirring blade, the material was allowed to stand still for twenty minutes. The glass melt was flown into a jig made of black lead, and quenched to obtain each glass block of about 100 g in weight. Thereafter, each glass was heated again, and gradually cooled at a cooling rate of 1 to 2°C / minute to perform a straightening process.

A test piece having a size of 4 $\times$ 4 $\times$ 15 mm was cut out of the obtained glass block, and a thermal expansion coefficient and a transition point of the piece were measured. The thus-obtained glass block was pulverized, and the pulverized powder was mixed with organic solvent to manufacture a glass paste. The glass paste was applied to the element 1 without the protective coat, and then calcined. The calcination temperature of the test piece was determined.

Table 1 shows examples of glass compositions. The compositions of glasses of Examples 1 to 11 were manufactured by changing the amount of SiO$_2$. The compositions of glasses of Examples 12 to 18 were manufactured by changing the amount of Al$_2$O$_3$. The compositions of glasses of Examples 19 to 26 were manufactured by changing the amount of alkaline earth oxide. The compositions of glasses of Examples 27 to 31 were manufactured by changing the amount of ZrO$_2$. The compositions of glasses of Examples 32 to 37 were manufactured by changing the amount of Gd$_2$O$_3$.

The glass having a transition point higher than 650 °C, a temperature for forming the protective coat of 1300 °C or less, and a thermal expansion coefficient of 50 to 80 $\times$ 10$^{-7}$ /°C is appropriate for the protective coat material. Taking into consideration these conditions, as shown in Table 1, glass appropriate for the protective coat material was manufactured to contain 30 to 60 % by weight of SiO$_2$, 5 to 20 % by weight of Al$_2$O$_3$, 25 to 50 % by weight of alkaline earth oxide, 1 to 15 % by weight of ZrO$_2$, and 0 to 20 % by weight of rare earth oxide. The glass obtained had the transition point higher than 650 °C, the temperature for forming the protective coat of 1300 °C or less, and the thermal expansion coefficient of 50 to 80 $\times$ 10$^{-7}$ / °C.

[Table 1]

| Examples | Composition (wt%) | | | | | | | | | | | | Properties | | |
|---|---|---|---|---|---|---|---|---|---|---|---|---|---|---|---|
| | $SiO_2$ | $Al_2O_3$ | $B_2O_3$ | MgO | CaO | SrO | BaO | ZnO | $ZrO_2$ | $Gd_2O_3$ | Alkaline earth element in total | totall | Thermal expansion coefficient ($\times 10^{-7}$°C) | Transition point (°C) | Calcination temperature (°C) |
| | | | | | | | | | | | | | | | |
| 1 | 20.0 | 14.5 | 0.0 | 7.3 | 8.7 | 1.5 | 34.9 | 0.0 | 7.3 | 5.8 | 52.4 | 100.0 | 74 | 510 | 850 |
| 2 | 25.0 | 13.6 | 0.0 | 6.8 | 8.2 | 1.4 | 32.7 | 0.0 | 6.8 | 5.5 | 49.1 | 100.0 | 72 | 560 | 900 |
| 3 | 30.0 | 12.7 | 0.0 | 6.4 | 7.6 | 1.3 | 30.5 | 0.0 | 6.4 | 5.1 | 45.8 | 100.0 | 70 | 610 | 950 |
| 4 | 35.0 | 11.8 | 0.0 | 5.9 | 7.1 | 1.2 | 28.4 | 0.0 | 5.9 | 4.7 | 42.5 | 100.0 | 68 | 660 | 1000 |
| 5 | 40.0 | 10.9 | 0.0 | 5.5 | 6.5 | 1.1 | 26.2 | 0.0 | 5.5 | 4.4 | 39.3 | 100.0 | 66 | 710 | 1050 |
| 6 | 45.0 | 10.0 | 0.0 | 5.0 | 6.0 | 1.0 | 24.0 | 0.0 | 5.0 | 4.0 | 36.0 | 100.0 | 64 | 750 | 1100 |
| 7 | 50.0 | 9.1 | 0.0 | 4.5 | 5.5 | 0.9 | 21.8 | 0.0 | 4.5 | 3.6 | 32.7 | 100.0 | 63 | 765 | 1150 |
| 8 | 55.0 | 8.2 | 0.0 | 4.1 | 4.9 | 0.8 | 19.8 | 0.0 | 4.1 | 3.3 | 29.5 | 100.0 | 62 | 780 | 1200 |
| 9 | 60.0 | 7.3 | 0.0 | 3.6 | 4.4 | 0.7 | 17.5 | 0.0 | 3.6 | 2.9 | 26.2 | 100.0 | 61 | 795 | 1250 |
| 10 | 65.0 | 6.4 | 0.0 | 3.2 | 3.8 | 0.6 | 15.3 | 0.0 | 3.2 | 2.5 | 22.9 | 100.0 | 60 | 805 | 1300 |
| 11 | 70.0 | 5.5 | 0.0 | 2.7 | 3.3 | 0.5 | 13.1 | 0.0 | 2.7 | 2.2 | 19.8 | 100.0 | 59 | 815 | 1350 |
| | | | | | | | | | | | | | | | |
| 12 | 44.4 | 0.0 | 2.2 | 6.7 | 8.9 | 1.1 | 26.7 | 0.0 | 5.6 | 4.4 | 43.3 | 100.0 | 72 | 636 | 950 |
| 13 | 42.2 | 5.0 | 2.1 | 6.3 | 8.4 | 1.1 | 25.3 | 0.0 | 5.3 | 4.2 | 41.2 | 100.0 | 69 | 658 | 1000 |
| 14 | 40.0 | 10.0 | 2.0 | 6.0 | 8.0 | 1.0 | 24.0 | 0.0 | 5.0 | 4.0 | 39.0 | 100.0 | 66 | 680 | 1050 |
| 15 | 37.8 | 15.0 | 1.9 | 5.7 | 7.6 | 0.9 | 22.7 | 0.0 | 4.7 | 3.8 | 36.8 | 100.0 | 63 | 730 | 1110 |
| 16 | 35.6 | 20.0 | 1.8 | 5.3 | 7.1 | 0.9 | 21.3 | 0.0 | 4.4 | 3.6 | 34.7 | 100.0 | 60 | 780 | 1190 |
| 17 | 33.3 | 25.0 | 1.7 | 5.0 | 6.7 | 0.8 | 20.0 | 0.0 | 4.2 | 3.3 | 32.5 | 100.0 | 57 | 830 | 1250 |
| 18 | 31.1 | 30.0 | 1.6 | 4.7 | 6.2 | 0.8 | 18.7 | 0.0 | 3.9 | 3.1 | 30.3 | 100.0 | 54 | 880 | 1300 |
| | | | | | | | | | | | | | | | |
| 19 | 53.3 | 11.8 | 0.0 | 5.9 | 7.1 | 5.9 | 10.0 | 0.0 | 2.4 | 3.6 | 20.0 | 100.0 | 49 | 715 | 1130 |

(continued)

| Examples | Composition (wt%) | | | | | | | | | | | | Properties | | |
|---|---|---|---|---|---|---|---|---|---|---|---|---|---|---|---|
| | $SiO_2$ | $Al_2O_3$ | $B_2O_3$ | MgO | CaO | SrO | BaO | ZnO | $ZrO_2$ | $Gd_2O_3$ | Alkaline earth element in total | totall | Thermal expansion coefficient ($\times 10^{-7}$°C) | Transition point (°C) | Calcination temperature (°C) |
| 20 | 53.3 | 11.8 | 0.0 | 5.9 | 7.1 | 5.9 | 10.0 | 0.0 | 2.4 | 3.6 | 25.0 | 100.0 | 54 | 710 | 1120 |
| 21 | 50.3 | 11.2 | 0.0 | 5.6 | 6.7 | 5.6 | 15.0 | 0.0 | 2.2 | 3.4 | 30.0 | 100.0 | 59 | 705 | 1110 |
| 22 | 45.0 | 10.0 | 0.0 | 5.0 | 6.0 | 5.0 | 24.0 | 0.0 | 2.0 | 3.0 | 35.0 | 100.0 | 64 | 700 | 1100 |
| 23 | 44.4 | 9.9 | 0.0 | 4.9 | 5.9 | 4.9 | 25.0 | 0.0 | 2.0 | 3.0 | 40.0 | 100.0 | 69 | 695 | 1090 |
| 24 | 41.4 | 9.2 | 0.0 | 4.6 | 5.5 | 4.6 | 30.0 | 0.0 | 1.8 | 2.8 | 45.0 | 100.0 | 74 | 690 | 1080 |
| 25 | 38.5 | 8.6 | 0.0 | 4.3 | 5.1 | 4.3 | 35.0 | 0.0 | 1.7 | 2.6 | 50.0 | 100.0 | 79 | 685 | 1070 |
| 26 | 35.5 | 7.9 | 0.0 | 3.9 | 4.7 | 3.9 | 40.0 | 0.0 | 1.6 | 2.4 | 55.0 | 100.0 | 84 | 680 | 1060 |
| | | | | | | | | | | | | | | | |
| 27 | 45.3 | 10.5 | 2.1 | 5.3 | 6.3 | 5.3 | 21.1 | 0.0 | 0.0 | 4.2 | 37.9 | 100.0 | 60 | 720 | 1090 |
| 28 | 43.0 | 10.0 | 2.0 | 5.0 | 6.0 | 5.0 | 20.0 | 0.0 | 5.0 | 4.0 | 36.0 | 100.0 | 65 | 730 | 1100 |
| 29 | 40.7 | 9.5 | 1.9 | 4.7 | 5.7 | 4.7 | 18.9 | 0.0 | 10.0 | 4.2 | 34.1 | 100.4 | 70 | 740 | 1110 |
| 30 | 38.5 | 8.9 | 1.8 | 4.5 | 5.4 | 4.5 | 17.9 | 0.0 | 15.0 | 4.4 | 32.2 | 100.9 | 75 | 750 | 1120 |
| 31 | 36.2 | 8.4 | 1.7 | 4.2 | 5.1 | 4.2 | 16.8 | 0.0 | 20.0 | 4.2 | 30.3 | 100.8 | 80 | 760 | 1130 |
| | | | | | | | | | | | | | | | |
| 32 | 44.2 | 10.5 | 2.1 | 5.3 | 6.3 | 5.3 | 21.1 | 0.0 | 5.3 | 0.0 | 37.9 | 100.0 | 59 | 720 | 1090 |
| 33 | 42.0 | 10.0 | 2.0 | 5.0 | 6.0 | 5.0 | 20.0 | 0.0 | 5.0 | 5.0 | 36.0 | 100.0 | 64 | 730 | 1100 |
| 34 | 39.8 | 9.5 | 1.9 | 4.7 | 5.7 | 4.7 | 18.9 | 0.0 | 4.7 | 10.0 | 34.1 | 100.0 | 69 | 740 | 1110 |
| 35 | 37.6 | 8.9 | 1.8 | 4.5 | 5.4 | 4.5 | 17.9 | 0.0 | 4.5 | 15.0 | 32.2 | 100.0 | 74 | 750 | 1120 |
| 36 | 35.4 | 8.4 | 1.7 | 4.2 | 5.1 | 4.2 | 16.8 | 0.0 | 4.2 | 20.0 | 30.3 | 100.0 | 79 | 760 | 1130 |
| 37 | 33.2 | 7.9 | 1.6 | 3.9 | 4.7 | 3.9 | 15.8 | 0.0 | 3.9 | 25.0 | 28.4 | 100.0 | 84 | 770 | 1140 |

[Experimental Example 2]

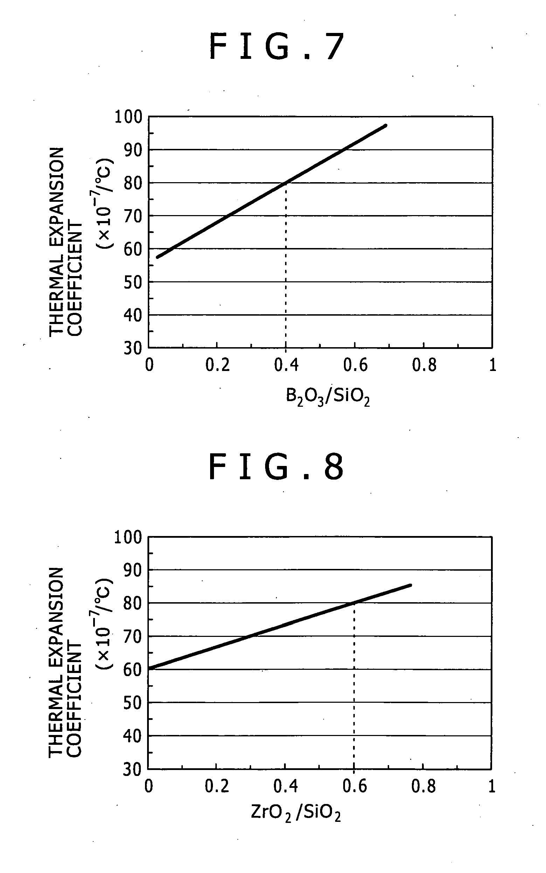

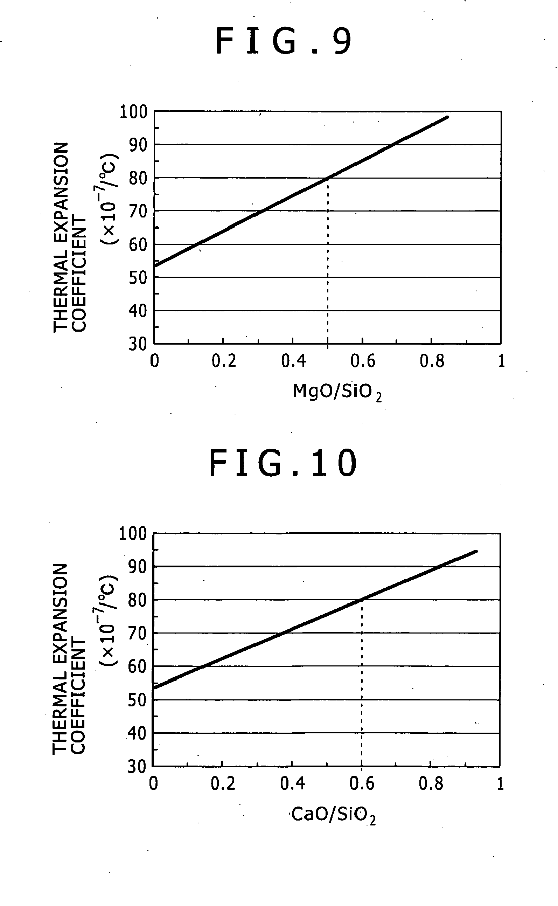

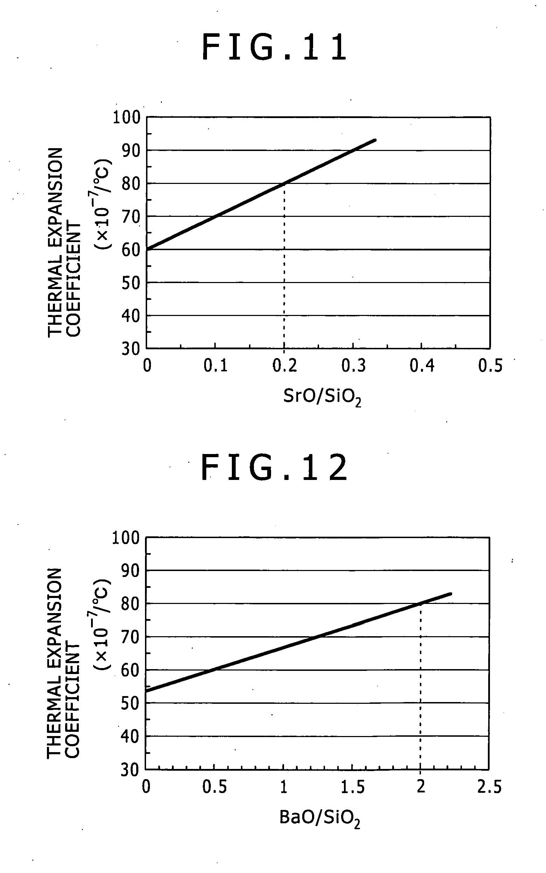

Next, the composition of glass having the optimum thermal expansion coefficient was examined. The composition of the glass of Example 15 shown in Table 1 was changed to confirm the relationship between the thermal expansion coefficient of the glass and the weight ratio of each oxide component to $SiO_2$. The results are shown in Figs. 7 to 12. As shown in Fig. 7, when the ratio of $B_2O_3/SiO_2$ is larger than 0.4, the thermal expansion coefficient becomes larger than $80 \times 10^{-7}/°C$. Thus, the ratio of $B_2O_3/SiO_2$ is preferable equal to or less than 0.4. As shown in Fig. 8, when the ratio of $ZrO_2/SiO_2$ is larger than 0.6, the thermal'expansion coefficient becomes larger than $80 \times 10^{-7}/°C$. Thus, the ratio of $ZrO_2/SiO_2$ is preferable equal to or less than 0.6. As shown in Fig. 9, when the ratio of $MgO/SiO_2$ is larger than 0.5, the thermal expansion coefficient becomes larger than $80 \times 10^{-7}/°C$. Thus, the ratio of $MgO/SiO_2$ is preferable equal to or less than 0.5. As shown in Fig. 10, when the ratio of $CaO/SiO_2$ is larger than 0.6, the thermal expansion coefficient becomes larger than $80 \times 10^{-7}/°C$. Thus, the ratio of $CaO/SiO_2$ is preferable equal to or less than 0.6. As shown in Fig. 11, when the ratio of $SrO/SiO_2$ is larger than 0.2, the thermal expansion coefficient becomes larger than $80 \times 10^{-7}/°C$. Thus, the ratio of $SrO/SiO_2$ is preferable equal to or less than 0.2. As shown in Fig. 12, when the ratio of $BaO/SiO_2$ is larger than 2, the thermal expansion coefficient becomes larger than $80 \times 10^{-7}/°C$. Thus, the ratio of $BaO/SiO_2$ is preferable equal to or less than 2.

[Experimental Example 3]

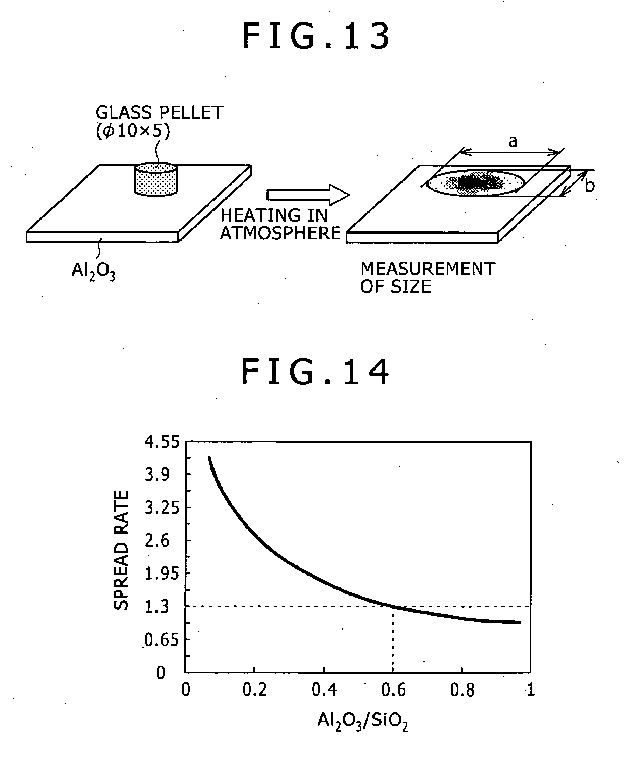

Next, the composition of glass suitable for use as a glass paste was examined.
In forming the protective coat layer using the above-mentioned glass material, the glass material was pulverized, and then mixed with solvent and the like to make a glass past. The glass paste was applied and calcined to form the protective coat. As shown in Fig. 13, the rate of spread was measured to evaluate the easiness of formation of the protective coat layer using each glass.
The glass powder pulverized and sized at 150 $\mu$m or less was converted into a glass pellet having a diameter of 10 mm and a height of 5 mm using a hand press or the like. The glass pellet was put on an $Al_2O_3$ plate and heated at a temperature of 1100 °C for one hour in atmosphere. An area of wettability spread of the glass after heating was calculated, and the area rate (spread rate) of the heated glass to the glass pellet was calculated using the area of the glass pellet as a reference. The glass having the spread rate larger than 1.3 was able to form a good protective coat. However, the glass having the spread rate below 1.3 makes the thickness of the coat ununiform, and thus was not able to form the good protective coat.

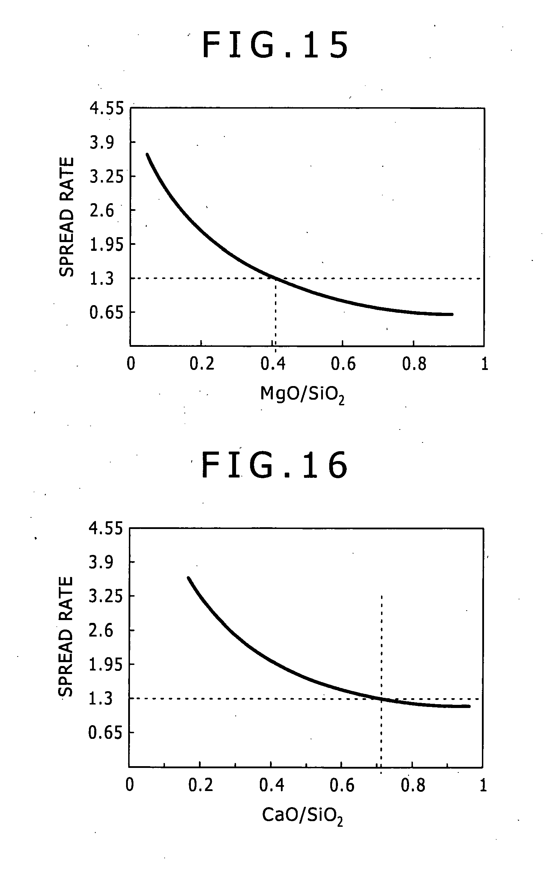

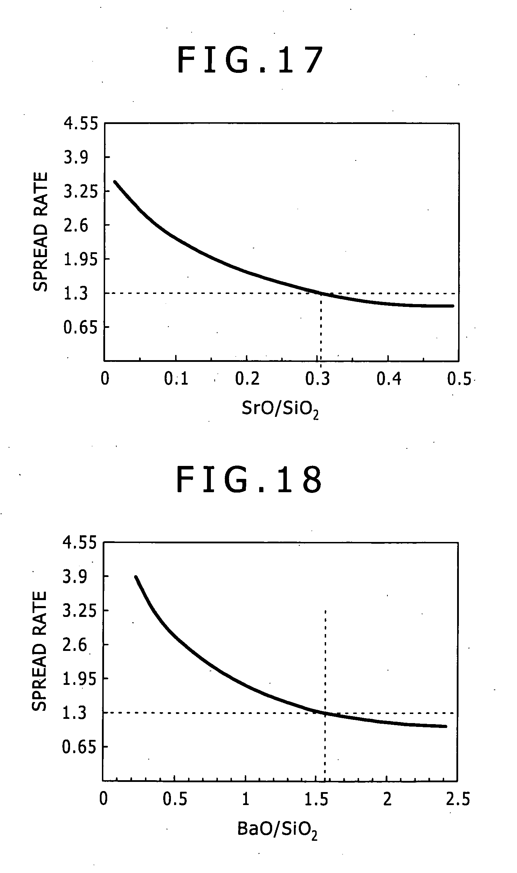

Figs. 14 to 18 show the relationship between the spread rate and the weight ratio of each oxide composition to $SiO_2$ when the amount of each component of the glass of Example 6 shown in Table 1 is changed. As shown in Fig. 14, when the ratio of $Al_2O_3/SiO_2$ is larger than 0.6, the spread rate becomes smaller than 1.3. Thus, the ratio of $Al_2O_3/SiO_2$ is preferable equal to or less than 0.6. As shown in Fig. 15, when the ratio of $MgO/SiO_2$ is larger than 0.4, the spread rate becomes smaller than 1.3. Thus, the ratio of $MgO/SiO_2$ is preferable equal to or less than 0.6. As shown in Fig. 16, when the ratio of $CaO/SiO_2$ is larger than 0.7, the spread rate becomes smaller than 1.3. Thus, the ratio of $CaO/SiO_2$ is preferable equal to or less than 0.7. As shown in Fig. 17, when the ratio of $SrO/SiO_2$ is larger than 0.3, the spread rate becomes smaller than 1.3. Thus, the ratio of $SrO/SiO_2$ is preferable equal to or less than 0.3. As shown in Fig. 18, when the ratio of $BaO/SiO_2$ is larger than 1.5, the spread rate becomes smaller than 1.3. Thus, the ratio of $BaO/SiO_2$ is preferable equal to or less than 1.5.
At the heating temperature higher than 1100°C, the weight ratio of each component having the spread rate below 1.3 to $SiO_2$ is increased as compared to the case of the heating temperature at 1100 °C. A rate in increase of weight ratio is 0.2 to 0.5/100°C.

[Experimental Example 4]

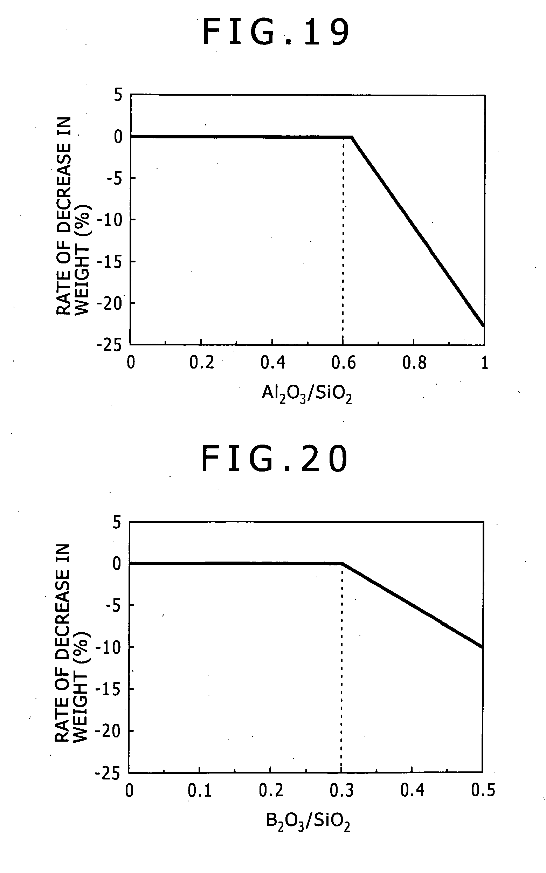

The element is used in exhaust gas, and thus the protective coat is required to have corrosion resistance to an acid atmosphere. Thus, 0.5 mL of hydrochloric acid, 1.4 mL of nitric acid, 7.3 mL of sulfuric acid, 1 mL of formic acid, 8.3 mL of acetic acid, 5.5 mL of formalin, 2000 mg of sodium nitrite, and 1500 mg of sodium sulfite were mixed in 1 L of pure water, and heated to 80 °C to make simulated exhaust gas condensed water (PH = 1, 30cc). Then, the corrosion resistance of each glass material was evaluated using the thus-obtained simulated condensed water.
Specifically, samples of the glass materials formed to have a size of 4 mm × 4 mm × 15 mm by changing the ratio of each component of the glass of Example 28 shown in Table 1 were immersed in the simulated exhaust gas condensed water, and then the changes in form and weight of the samples were measured. Figs. 19 to 24 show the relationship between the weight ratio of each oxide component to $SiO_2$ and the rate of decrease in weight of, after 20 hours, the glass based on the composition of Example 28 in Table 1.
As shown in Fig. 19, when the ratio of $Al_2O_3/SiO_2$ is larger than 0.6, the weight of the glass material is decreased.

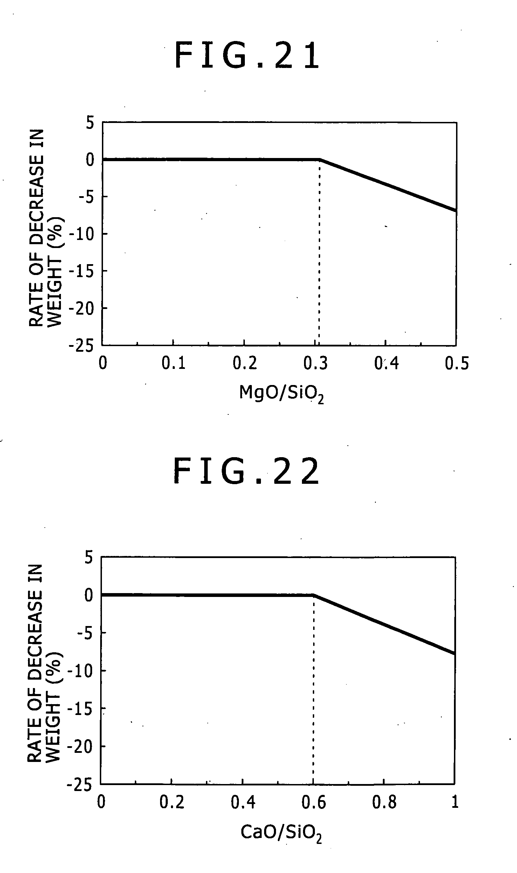

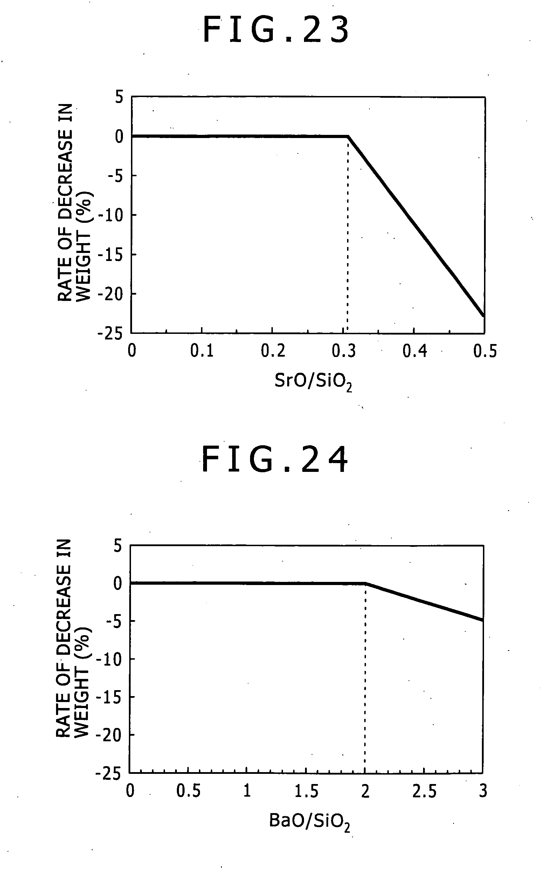

Thus, the ratio of $Al_2O_3/SiO_2$ is preferably equal to or less than 0.6. As shown in Fig. 20, when the ratio of $B_2O_3/SiO_2$ is larger than 0.3, the weight of the glass material is decreased. Thus, the ratio of $B_2O_3/SiO_2$ is preferably equal to or less than 0.3. As shown in Fig. 21, when the ratio of $MgO/SiO_2$ is larger than 0.3, the weight of the glass material is decreased. Thus, the ratio of $MgO/SiO_2$ is preferably equal to or less than 0.3. As shown in Fig. 22, when the ratio of $CaO/SiO_2$ is larger than 0.6, the weight of the glass material is decreased. Thus, the ratio of $CaO/SiO_2$ is preferably equal to or less than 0.6. As shown in Fig. 23, when the ratio of $SrO/SiO_2$ is larger than 0.3, the weight of the glass material is decreased. Thus, the ratio of $SrO/SiO_2$ is preferably equal to or less than 0.3. As shown in Fig. 24, when the ratio of $BaO/SiO_2$ is larger than 2, the weight of the glass material is decreased. Thus, the ratio of $BaO/SiO_2$ is preferably equal to or less than 2.

[Example 1]

A flow rate measuring element shown in Fig. 1 was manufactured. A metal wire made of platinum was wound around a cylindrical alumina base (of 0.5 mm in diameter, and 2 mm in length). After connecting the metal wire to the lead, a glass coat layer was formed over the connected elements. The glass coat layer in use was made by making a glass No.6 in the form of paste by use of organic solvent (terpineol) as shown in Table 1, applying the glass paste to the connected elements, and calcining the paste at a temperature of 1100 °C.

The EGR cooler was disposed in the exhaust gas recirculation system, and the flowmeters having the protective coat formed of silica glass were on the front and rear stages thereof. The temperature of exhaust gas on the front stage was about 200 °C, and the temperature of exhaust gas on the rear stage was about 80 °C. During one day, the internal combustion engine was operated taking into consideration actual operating conditions. The element of the flowmeter has the structure shown in Fig. 1, using the glass No.6 shown in Table 1 as the protective coat. Table 2 shows the relationship between the exhaust gas temperature, the heating temperature of the heating element, and states of adhesion matter onto the surface of the element.

[Table 2]

| Exhaust gas temperature (°C) | 80 | | 200 |
|---|---|---|---|
| Heating element temperature (°C) | 350 | 600 | 600 |
| Pollution of heating element | Metal adhesion | No adhesion matter | No adhesion matter |

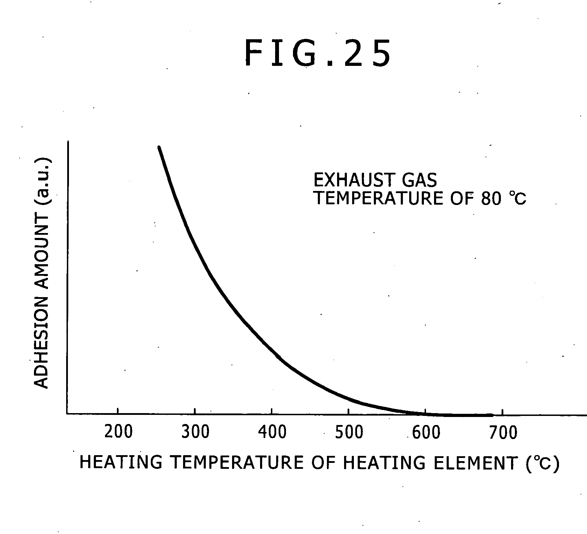

Fig. 25 shows the relationship between the heating temperature of the heating element and the amount of adhesion when the exhaust gas temperature is 80 °C.

The reason for adhesion of metal is that condensed water provided by cooling steam contained in the exhaust gas by a cooler corrodes the piping to cause metal to be deposited on the flowmeter on the rear side. When the flowmeter is disposed on the rear side of the cooler (when the exhaust gas temperature is 80 °C below the dew-point temperature), metal components eluted from the piping by the condensed water adhere to the surface of the heating element at the heating temperature of 350 °C, whereas no matter adheres thereto at 600 °C. When the flowmeter is disposed on the front side of the cooler (when the exhaust gas temperature is 200 °C above the dew-point temperature), no matter adheres to the surface in heating the heating element at a temperature of 600 °C.

A vapor film layer is formed on the surface of the flowmeter by water or moisture in exhaust gas by heating the thermal gas flowmeter at a predetermined temperature or higher when the exhaust gas temperature is equal to or less than the dew-point temperature, which prevents the adhesion of components, such as metal.

[Example 2]

An example of the EGR system using the flow rate measuring element will be described below. Fig. 3 shows the construction diagram of the EGR system of this example. The gas flowmeter 7 is disposed between the EGR cooler 15 and the EGR valve 14 to measure the flow rate of gas, thereby controlling the amount of EGR. Such a sensor can control the amount of circulation of the exhaust gas to the optimal one.

In a conventional example, the EGR amount is controlled by the indirect type system which is designed to estimate the amount of EGR based on information from the air flow sensor 11 and about the opening degree of the electrically controlled throttle 12. In this example described above, the sensor is provided to achieve the optimal amount of circulation of the exhaust gas, so that the amount of $NO_x$ is a tenth part of that in the conventional method, and also that the amount of PM is a fiftieth part of that in the conventional method under the same traveling conditions (states).

In order to reduce the adhesion matter onto the flowmeter, the EGR system is also effective which is designed to heat the flow rate measuring element before driving, and to recirculate the exhaust gas after the predetermined temperature is reached. The same effect is also obtained by heating the flow rate measuring element before driving an internal combustion engine, such as an engine.

[Example 3]

Fig. 4 is an example of another EGR system including the gas flowmeters 7 disposed before and after the EGR cooler 15. The EGR cooler 15 is disposed for the purpose of cooling the exhaust gas. When the EGR cooler 15 is clogged with PMs of the exhaust gas, the EGR system cannot stably supply the EGR gas to the internal combustion engine 13. The gas glowmeters 7 are disposed before and after the EGR cooler 15 to respectively measure the flow rates of exhaust gas, thereby enabling detection of a clogged state of the EGR cooler.

[Example 4]

Fig. 5 shows an example of a further EGR system including the gas flowmeters 7 disposed before and after the EGR valve 14. The EGR valve 14 adjusts the amount of EGR supplied to the internal combustion engine 13. When the PMs of the exhaust gas adhere to the EGR valve 14, the accuracy of the supply amount is reduced. The gas flowmeters 7 are disposed before and after the EGR valve 14 to respectively measure the flow rates of the exhaust gas. Thus, the gas flowmeters 7 can detect the respective flow rates together with the information about opening and closing of the valve, and can further detect PMs adhered to the EGR valve 14.

Although the invention has been described in its preferred embodiments with a certain degree of particularity, obviously many changes and variations are possible therein. It is therefore to be understood that the present invention may be practiced otherwise than as specifically described herein without departing from the scope and spirit thereof.

**Claims**

1. A thermal gas flowmeter (7) comprising:

   a heating resistor (4) disposed in a flow path of gas to be measured; and
   an external circuit (10) for outputting a signal according to a flow rate of the gas to be measured,

   wherein the heating resistor (4) is heated at a temperature equal to or higher than a vapor film forming temperature for forming a vapor film.

2. A thermal gas flowmeter (7) comprising:

   a heating resistor (4) disposed in a flow path of gas to be measured; and
   an external circuit (10) for outputting a signal according to a flow rate of the gas to be measured,

   wherein the heating resistor (4) is controlled to be heated at a temperature Twsn or more represented by the following formula:

$$\mathrm{Twsn\ =\ TL\ +\ (314\ -TL)/(1\ +\beta 1\ /\ 2)}$$

$$\beta\ =\lambda WCW\rho W/\ \lambda LCL\rho L$$

   where

   TL is a temperature of droplet,
   $\lambda$L is a thermal conductivity of water,
   CL is a specific heat of water,
   $\rho$L is a density of water,
   $\lambda$W is a thermal conductivity of a coat material,
   CW is a specific heat of the coat material, and

pW is a density of the coat material.

3. A thermal gas flowmeter (7) comprising:

   a heating resistor (4) disposed in a flow path of gas to be measured; and
   an external circuit (10) for outputting a signal according to a flow rate of the gas to be measured,

   wherein the heating resistor (4) is controlled to be heated at a temperature of 600 °C or more.

4. The thermal gas flowmeter (7) according to any one of claims 1 to 3, wherein, when the temperature of the gas to be measured is lower than a dew-point temperature, said heating control is performed, and when the temperature of the gas to be measure is higher than the dew-point temperature, said heating control is changed to control of heating the heating resistor (4) at a temperature of 350 °C or more.

5. The thermal gas flowmeter (7) according to any one of claims 1 to 3, wherein the heating resistor (4) includes an electrically insulating base (5), an electric resistor (4) formed at the base (5), a protective layer (3) formed over the base (5) and the electric resistor (4), and a lead (2) electrically connecting the electric resistor (4) with the external circuit (10).

6. The thermal gas flowmeter (7) according to claim 5, wherein the protective layer (3) includes glass containing 30 to 60 % by weight of $SiO_2$, 5 to 20 % by weight of $Al_2O_3$, 25 to 50 % by weight of alkaline earth oxide, and 1 to 15 % by weight of $ZrO_2$ in terms of oxide.

7. The thermal gas flowmeter (7) according to claim 6, wherein the protective layer (3) contains 0 to 20 % by weight of a rare earth oxide in terms of oxide.

8. The thermal gas flowmeter (7) according to claim 6, wherein the protective layer (3) includes glass whose glass transition point is equal to or more than 650 °C.

9. The thermal gas flowmeter (7) according to claim 6, wherein the protective layer (3) includes glass whose thermal expansion coefficient is in a range of 50 to 80 $\times$ 10$^{-7}$/ °C.

10. An exhaust gas recirculation system comprising:

    a pipe for recirculating exhaust gas from an internal combustion engine (13) back to an intake side;
    a controller for controlling an amount of the recirculated exhaust gas; and
    a thermal gas flowmeter (11) provided in the pipe, said exhaust gas recirculation system being adapted to recirculate at least part of the exhaust gas back to the intake side,

    wherein the thermal gas flowmeter (11) is the thermal gas flowmeter according to any one of claims 1 to 3.

11. The exhaust gas recirculation system according to claim 10, further comprising a cooler (15) for cooling the exhaust gas in the pipe,
    wherein the thermal gas flowmeters (7; 11) are respectively provided on upstream and downstream sides of a gas flow of the cooler (15).

12. The exhaust gas recirculation system according to claim 10, further comprising:

    a flow rate adjustment valve (14) provided in the pipe for adjusting a flow rate of the recirculated exhaust gas; and
    a flow rate control unit for controlling the flow rate adjustment valve,

    wherein the flow rate control unit controls the flow rate adjustment valve (14) according to information about the flow rate of the exhaust gas obtained by the thermal gas flowmeter (7; 11).

13. The exhaust gas recirculation system according to claim 10, wherein the controller performs control such that the recirculation of the exhaust gas is started when the temperature of the heating resistor (4) detected by the thermal gas flowmeter (7) is equal to or more than a vapor film forming temperature for forming a vapor film.

**14.** The exhaust gas recirculation system according to claim 10, wherein the controller performs control such that the operation of the internal combustion engine (13) is started when the temperature of the heating resistor (4) detected by the thermal gas flowmeter (7) is equal to or more than the vapor film forming temperature for forming the vapor film.

# FIG.1

# FIG.2

FLOW OF FLUID

# F I G . 3

14   7   15

11

INTAKE
SIDE

12

13

EXHAUST SIDE

# F I G . 4

14   7   15

7

11

INTAKE
SIDE

12

13

EXHAUST SIDE

# F I G . 5

# F I G . 6

# FIG.7

# FIG.8

# FIG.9

# FIG.10

# F I G . 1 1

# F I G . 1 2

# FIG.13

GLASS PELLET
($\phi$10×5)

Al$_2$O$_3$

HEATING IN
ATMOSPHERE

a

b

MEASUREMENT
OF SIZE

# FIG.14

# FIG.15

# FIG.16

# FIG.17

# FIG.18

# FIG.19

# FIG.20

# FIG.21

# FIG.22

# FIG.23

# FIG.24

# FIG.25

EXHAUST GAS
TEMPERATURE OF 80 °C

ADHESION AMOUNT (a.u.)

200    300    400    500    600    700

HEATING TEMPERATURE OF HEATING ELEMENT (°C)

Europäisches
Patentamt

European
Patent Office

Office européen
des brevets

# EUROPEAN SEARCH REPORT

Application Number

EP 09 00 1444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/063110 A1 (FLOWTEC AG [CH]; POPP OLIVER [CH]; KOUDAL OLE [CH]; GIMSON CHRIS [GB];) 7 June 2007 (2007-06-07) | 1-2 | INV.<br>G01F1/68<br>G01F1/684 |
| Y | * paragraphs [0020] - [0036]; claim 1; figures * | 10-14 | G01F1/698<br>F02D41/00 |
|  | ----- |  |  |
| X | EP 1 845 344 A2 (HITACHI LTD [JP]) 17 October 2007 (2007-10-17) | 1-3,5-9 |  |
| Y | * paragraphs [0015] - [0075]; figures * | 10-14 |  |
|  | ----- |  |  |
| X | EP 1 835 267 A2 (HITACHI LTD [JP]) 19 September 2007 (2007-09-19) * paragraphs [0016] - [0089]; figures * | 1-5 |  |
|  | ----- |  |  |
| Y | US 2003/114978 A1 (RIMNAC PHILLIP F [US] ET AL) 19 June 2003 (2003-06-19) * the whole document * | 10-14 |  |
|  | ----- |  |  |

TECHNICAL FIELDS
SEARCHED      (IPC)

G01F
F02D

The present search report has been drawn up for all claims

| Place of search | Date of completion of the search | Examiner |
|---|---|---|
| Munich | 13 July 2009 | Politsch, Erich |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 09 00 1444

This annex lists the patent family members relating to the patent documents cited in  the above-mentioned European search report.
The members are as contained in the European Patent Office EDP file on
The European Patent Office is in no way liable for these particulars which are merely given for the purpose of information.

13-07-2009

| Patent document cited in search report | | Publication date | Patent family member(s) | | Publication date |
|---|---|---|---|---|---|
| WO 2007063110 | A1 | 07-06-2007 | DE 102005057687 | A1 | 06-06-2007 |
| | | | EP  1955022 | A1 | 13-08-2008 |
| EP 1845344 | A2 | 17-10-2007 | JP  2007285738 | A | 01-11-2007 |
| | | | US  2007245822 | A1 | 25-10-2007 |
| EP 1835267 | A2 | 19-09-2007 | JP  2007248136 | A | 27-09-2007 |
| | | | US  2007220968 | A1 | 27-09-2007 |
| US 2003114978 | A1 | 19-06-2003 | CA  2411246 | A1 | 18-06-2003 |
| | | | DE  10258402 | A1 | 10-07-2003 |
| | | | GB  2384870 | A | 06-08-2003 |
| | | | JP  2003201903 | A | 18-07-2003 |

EPO FORM P0459

For more details about this annex : see Official Journal of the European Patent Office, No. 12/82

**EP 2 105 714 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007101426 A